# FASCICULE DE BREVET EUROPEEN

(11) **EP 2 688 703 B1**
(45) Date de publication et mention de la délivrance du brevet: **04.01.2017**
(21) Numéro de dépôt: 12717357.3
(22) Date de dépôt: 22.03.2012
(51) Int. Cl.: B23C 5/06, B23C 5/24

(54) **PROCEDE ET DISPOSITIF DE FRAISAGE - SURFACAGE**
VERFAHREN UND VORRICHTUNG ZUR FRÄS- ENDBEARBEITUNG
PROCESS AND DEVICE FOR MILLING-SURFACING

(30) Priorité: 22.03.2011 FR 1152366
(43) Date de publication de la demande: 29.01.2014
(73) Titulaire: Renault S.A.S., 92100 Boulogne-Billancourt (FR)
(72) Inventeur: CHERONNEAU, Gerard, F-91460 Marcoussis (FR); BAUDRY, Arnaud, F-78170 Rosny Sur Seine (FR)
(86) Numéro de dépôt international: PCT/FR2012/050599
(87) Numéro de publication internationale: WO 2012/127171

(56) Documents cités:
- EP-A1- 0 095 945
- EP-A1- 0 870 563
- EP-A1- 0 879 111
- FR-A3- 2 894 497
- GB-A- 2 405 365
- JP-A- 52 069 087

## Description

La présente invention concerne un procédé de fraisage d'une surface plane tel que décrit dans le préambule de la revendication 1, et un outil de fraisage pour la mise en oeuvre d'un tel procédé, tel que décrit dans le préambule de la revendication 2. Un tel procédé et un tel outil sont décrits dans le document FR 2 894 497 A.

L'invention concerne plus particulièrement un procédé de fraisage d'une surface plane, selon lequel une fraise, dont l'axe de rotation est perpendiculaire à la surface à usiner, est déplacée selon une direction parallèle au plan de la surface, de manière à réaliser l'usinage de celle-ci en une opération unique d'usinage sur une épaisseur de matière déterminée, au moyen d'une unique tête de fraisage.

Elle trouve une application privilégiée, mais non limitative, dans l'usinage d'une face supérieure de carter de moteur à combustion interne.

L'usinage d'une face supérieure de carter s'effectue généralement à l'aide d'une fraise, qui se déplace horizontalement sur celle-ci. L'usinage se décompose en plusieurs opérations, dont une première étape d'ébauche, au cours de la quelle de la matière est éliminée sur une première épaisseur, et une ou plusieurs étapes de finition, au cours desquelles la surface d'ébauche est usinée successivement.

On connaît des fraises dites « étagées », comportant un axe de rotation perpendiculaire à la surface à usiner, une rangée supérieure d'arêtes réparties sur une première circonférence et une deuxième rangée inférieure d'arêtes de coupes réparties sur une deuxième circonférence, qui est décalée axialement par rapport à la première. Les deux rangées d'arêtes sont coaxiales et décalées à la fois axialement et radialement. La fraise réalise l'étape d'ébauche et l'étape de finition en usinant la surface du carter à deux hauteurs différentes, au cours d'une opération unique d'usinage.

Dans un autre type de fraise, dite « fraise escargot », les arêtes sont disposées en escargot autour du corps de fraise, avec un décalage axial et radial entre chaque arête. Lors de l'usinage, chaque arête de coupe usine une portion de la pièce à une hauteur axiale différente. La profondeur de passe totale de l'outil est ainsi répartie entre les différentes arêtes de l'outil. Cette disposition permet d'augmenter l'épaisseur enlevée sur un seul passage d'outil. Toutefois, elle réduit la durée de vie de l'outil, et présente un risque significatif de rayures sur la surface usinée.

La présente invention propose une autre disposition des arêtes de coupe, permettant de palier les inconvénients précités, grâce à un nouveau procédé de fraisage.

Elle prévoit que la fraise effectue simultanément dans la même position axiale par rapport à la surface à usiner, un travail d'ébauche, au moins un travail de finition intermédiaire, et un travail de finition, sur la même épaisseur de matière.

L'outil proposé comporte notamment plusieurs jeux d'arêtes de coupe décalées radialement, tout en étant disposées sur un même secteur axial de l'outil. Toutes les lames usinent la même épaisseur de manière, lorsque la fraise se déplace parallèlement à la surface à usiner.

D'autres caractéristiques et avantages de la présente invention ressortiront clairement de la description suivante d'un mode de réalisation non limitatif de celle-ci, en se reportant aux dessins annexés, sur lesquels :
- la figure 1 est une vue de dessous de la fraise proposée,
- la figure 2 est une coupe selon A-A de la figure 1,
- la figure 3 montre la disposition des cartouches de coupe, et
- la figure 4 illustre la disposition en escalier des arêtes de coupe.

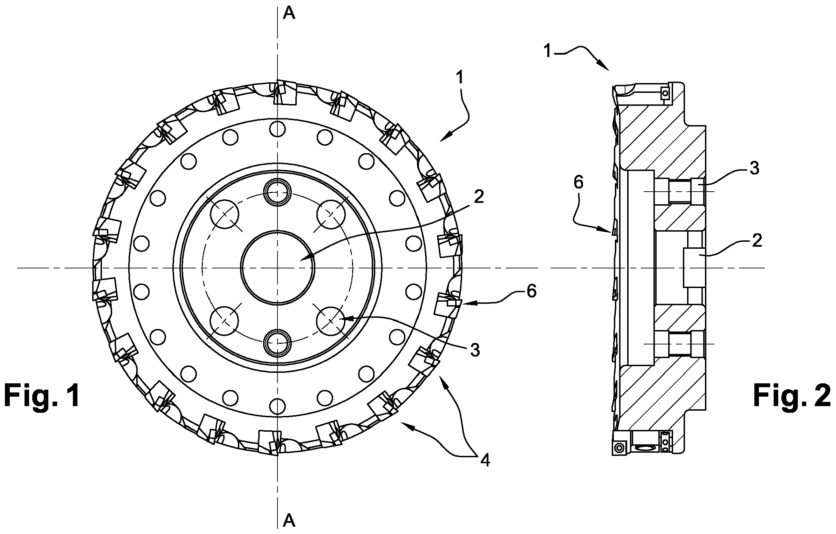

L'outil de fraisage illustré par les figures présente un corps de fraise 1, dont l'axe de rotation est toujours perpendiculaire à la surface usinée lors de l'opération de fraisage. Il présente plusieurs jeux d'arêtes de coupe décalés radialement. Sur la figure 1, on distingue le corps de l'outil 1, le trou de passage 2 de l'axe de centrage de la fraise (non représenté), les trous de passage 3 des vis de montage du corps de fraise 1 sur son support (non représenté), et l'ensemble des cartouches de coupe 4, réparties sur la circonférence du corps de l'outil 1.

Ces éléments se retrouvent sur la coupe de la figure 2, qui met en évidence l'affleurement des lames, ou plaquettes de coupe 6, sur la base du corps d'outil 1.

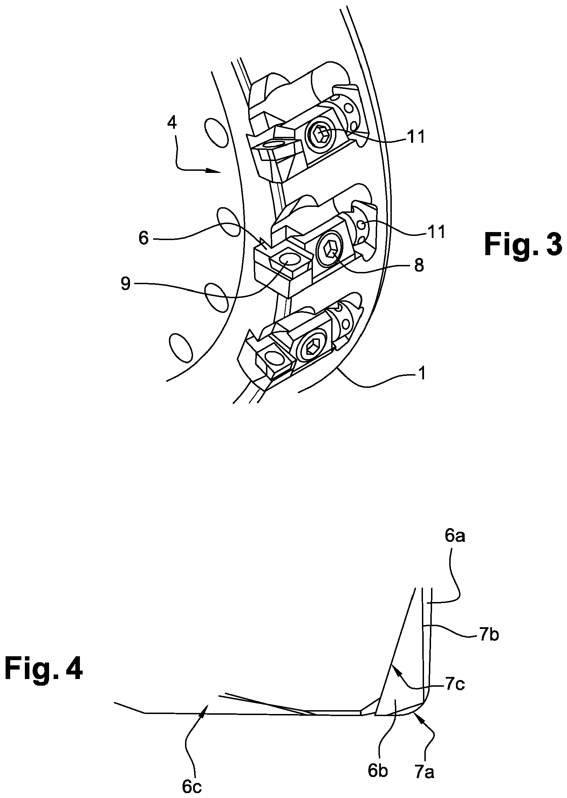

Le détail de la figure 3 fait ressortir la disposition et la fixation des plaquettes 6 sur les cartouches 4. Les cartouches 4 sont serrées par des vis de serrage 8 sur le corps de l'outil 1. Les plaquettes 6 sont serrées par des vis de serrage 9 sur la cartouche 4, et réglables en position sur celle-ci grâce à des vis de serrage (non représentées), dont on voit les trous d'introduction 11.

Les arêtes de coupe 7 sont les arêtes de travail des plaquettes amovibles 6, qui sont réglables en position sur les cartouches porte-plaquettes 4, elles mêmes réglables en position sur le corps de l'outil 1.

Sur la figure 4, on voit trois plaquettes successives 6a, 6b, 6c en projection dans un même plan diamétral de l'outil. Leurs arêtes 7a, 7b, 7c se chevauchent en escalier sur toute leur hauteur de coupe. L'outil présente plusieurs jeux identiques d'arêtes de coupe, qui sont décalées radialement entre elles au sein d'un même jeu. Comme indiqué ci-dessous, toutes les arêtes 7a, 7b, 7c sont cependant disposées sur un même secteur axial de l'outil, de manière à usiner ensemble la même épaisseur de matière, lorsque la fraise se déplace parallèlement à la surface à usiner. Dans le jeu de trois plaquettes 6a, 6b, 6c montrées en projection dans un même plan diamétral de l'outil sur la figure 4, la plaquette 6a est la première à usiner la matière (si on suppose que la rotation de l'outil les entraîne vers l'arrière du plan de projection). Elle fait donc le travail d'ébauche. La plaquette intermédiaire 6b, légèrement en retrait vers l'intérieur par rapport à la première, effectue un travail de finition intermédiaire. La troisième plaquette 6c, en retrait par rapport à la précédente, effectue le travail de finition proprement dit.

Les trois plaquettes 6a, 6b, 6c, de la figure 4 constituent un jeu de trois plaquettes. Il est aussi possible d'avoir les trois plaquettes du jeu dans une disposition différente : 6a, 6c, 6b. Le même jeu de plaquettes se retrouve plusieurs fois sur la circonférence de l'outil. Dans l'exemple de réalisation non limitatif de l'invention décrit ci-dessus, le jeu de plaquettes comporte trois plaquettes. Sans sortir du cadre de l'invention on peut cependant prévoir un nombre de plaquettes par jeu supérieur, par exemple quatre, de manière à effectuer plusieurs finitions intermédiaires entre l'ébauche et la dernière finition. Dans tous les cas, les plaquettes sont réparties régulièrement sur la circonférence de l'outil en jeux successifs et identiques, au moins au nombre de deux. Chaque première arête, par rapport au sens de rotation de l'outil, est une arête d'ébauche, les suivantes se décalant successivement en direction radiale vers l'extérieur, de manière à usiner progressivement la même épaisseur de matière.

Le nombre de cartouches, le nombre de plaquettes par jeu, et le nombre de jeux de plaquettes peuvent varier. Dans tous les cas, l'outil comporte plusieurs jeux de plaquettes (donc d'arêtes de coupe), sur un même diamètre, c'est-à-dire dans la même position axiale sur le corps de l'outil. Les jeux sont répartis régulièrement sur la circonférence : trois jeux identiques d'arêtes, occupent chacun un secteur de 120°sur la circonférence du corps d'outil, et quatre jeux occupent des secteurs de à 90°.

En résumé, l'outil de fraisage proposé présente plusieurs jeux identiques d'arêtes de coupe décalées radialement entre elles au sein d'un même jeu, avec la même position axiale sur l'outil. La fraise effectue simultanément, dans la même position axiale par rapport à la surface à usinage, un travail d'ébauche, au moins un travail de finition intermédiaire, et un travail de finition, sur la même épaisseur de matière. Cet outil est donc très différent des systèmes de fraises étagées, ou en escargot, évoqués plus haut, dans lesquels les arêtes sont décalées axialement sur le corps de l'outil.

Le procédé de fraisage mis en oeuvre avec cet outil est particulièrement efficace, puisque la fraise peut effectuer simultanément, dans la même position axiale par rapport à la surface à usinage, un travail d'ébauche, au moins un travail de finition intermédiaire, et un travail de finition, sur la même épaisseur de matière. Comme indiqué plus haut, cet outil et le procédé décrits trouvent une application privilégiée, mais non limitative, dans l'usinage d'une face supérieure de carter de moteur à combustion interne. L'invention trouve en effet le même intérêt pour l'usinage de toute surface métallique plane, mono ou bimatière, appartenant à un moteur thermique, ou à tout autre organe mécanique.

## Revendications

1. Procédé de fraisage d'une surface plane au cours de laquelle une fraise, dont l'axe de rotation est perpendiculaire à la surface à usiner, est déplacée selon une direction parallèle au plan de la surface de manière à réaliser l'usinage de la surface en une opération unique d'usinage sur une épaisseur de matière déterminée au moyen d'une unique tête de fraisage, **caractérisé en ce que** toutes les arêtes de coupe de la fraise usinent simultanément la même épaisseur de matière de manière à effectuer ensemble sur celle-ci, dans la même position axiale par rapport à la surface à usinage, un travail d'ébauche, au moins un travail de finition intermédiaire, et un travail de finition, sur la même épaisseur de matière.

2. Outil de fraisage cylindrique pour la mise en oeuvre d'un procédé selon la revendication 1, comportant plusieurs jeux d'arêtes de coupe (7, 7a, 7b, 7c) décalées radialement, **caractérisé en ce que** toutes les arêtes sont cependant disposées sur un même secteur axial de l'outil, de manière à usiner ensemble la même épaisseur de matière lorsque la fraise se déplace parallèlement à la surface à

3. Outil de fraisage selon la revendication 2, **caractérisé en ce que** les arêtes de coupe (7a, 7b, 7c) se chevauchent en escalier sur toute leur hauteur de coupe, en projection dans un plan diamétral de l'outil.

4. Outil de fraisage selon la revendication 3, **caractérisé en ce que** les arêtes de coupe (7a, 7b, 7c) sont réparties régulièrement sur la circonférence de l'outil en jeux successifs, de manière à constituer au moins deux jeux identiques d'arêtes, dont chaque première arête (7a), vue dans le sens de rotation de l'outil est une arête d'ébauche, et dont les suivantes (7b, 7c) se décalent successivement en direction radiale vers l'extérieur, de manière à usiner progressivement la même épaisseur de matière.

5. Outil de fraisage selon la revendication 4, **caractérisé en ce qu'**il comporte trois jeux identiques d'arêtes (7a, 7b, 7c), occupant des secteurs de 120° sur sa circonférence.

6. Outil de fraisage selon la revendication 4, **caractérisé en ce qu'**il comporte quatre jeux identiques d'arêtes (7a, 7b, 7c), occupant des secteurs de 90° sur sa circonférence.

7. Outil de fraisage selon l'une des revendications 2 à 6, **caractérisé en ce que** chaque jeu d'arêtes (7a, 7b, 7c) comporte au moins trois types d'arêtes assurant respectivement l'ébauche, une finition intermédiaire, et la finition de l'usinage.

8. Outil de fraisage selon l'une des revendications 2 à 7, **caractérisé en ce que** les arêtes de coupe (7, 7a, 7b, 7c) appartiennent à des plaquettes amovibles (6) rapportées dans des cartouches porte-plaquettes (4) du corps de l'outil (1).

9. Outil de fraisage selon la revendication 8, **caractérisé en ce que** les plaquettes (6) sont réglables en position sur les cartouches (4).

## Patentansprüche

1. Verfahren zur Fräsbearbeitung einer ebenen Fläche, bei dem ein Fräser, dessen Drehachse senkrecht zu der zu bearbeitenden Fläche ist, in einer Richtung, die parallel zu der Ebene der Fläche ist, derart bewegt wird, um das Bearbeiten der Fläche auf einer bestimmten Materialstärke mittels eines einzigen Fräskopfes in einem einzigen Bearbeitungsvorgang durchzuführen, **dadurch gekennzeichnet, dass** alle Schneidkanten des Fräsers gleichzeitig die gleiche Materialstärke derart bearbeiten, um zusammen auf dieser in der gleichen axialen Position in Bezug auf die zu bearbeitende Fläche eine Vorbearbeitung, mindestens eine Feinbearbeitung und eine Endbearbeitung auf der gleichen Materialstärke durchzuführen.

2. Zylindrisches Fräswerkzeug zur Durchführung eines Verfahrens nach Anspruch 1, umfassend mehrere Sätze von Schneidkanten (7, 7a, 7b, 7c), die in radialer Richtung versetzt sind, **dadurch gekennzeichnet, dass** alle Kanten trotzdem auf einem gleichen Axialbereich des Werkzeugs derart angeordnet sind, um zusammen die gleiche Materialstärke zu bearbeiten, wenn sich der Fräser parallel zu der zu Fläche bewegt.

3. Fräswerkzeug nach Anspruch 2, **dadurch gekennzeichnet, dass** sich die Schneidkanten (7a, 7b, 7c) auf ihrer gesamten Schnitthöhe in Projektion in einer diametralen Ebene des Werkzeugs treppenförmig überlagern.

4. Fräswerkzeug nach Anspruch 3, **dadurch gekennzeichnet, dass** die Schneidkanten (7a, 7b, 7c) gleichmäßig über den Umfang des Werkzeugs in aufeinanderfolgenden Sätzen derart verteilt sind, um mindestens zwei identische Sätze von Kanten zu bilden, wovon jede erste Kante (7a) in Drehrichtung des Werkzeugs gesehen eine Vorschnittkante ist, und wovon sich die Folgenden (7b, 7c) nacheinander derart in radialer Richtung nach außen versetzen, um schrittweise die gleiche Materialstärke zu bearbeiten.

5. Fräswerkzeug nach Anspruch 4, **dadurch gekennzeichnet, dass** es drei identische Sätze von Kanten (7a, 7b, 7c) aufweist, die Bereiche von 120° auf seinem Umfang einnehmen.

6. Fräswerkzeug nach Anspruch 4, **dadurch gekennzeichnet, dass** es vier identische Sätze von Kanten (7a, 7b, 7c) aufweist, die Bereiche von 90° auf seinem Umfang einnehmen.

7. Fräswerkzeug nach einem der Ansprüche 2 bis 6, **dadurch gekennzeichnet, dass** jeder Satz von Kanten (7a, 7b, 7c) mindestens drei Typen von Kanten aufweist, die jeweils die Vorbearbeitung, eine Feinbearbeitung und die Endbearbeitung gewährleisten.

8. Fräswerkzeug nach einem der Ansprüche 2 bis 7, **dadurch gekennzeichnet, dass** die Schneidkanten (7, 7a, 7b, 7c) zu Wendeplatten (6) gehören, die in Wendeplattenhalter-Kassetten (4) des Körpers des Werkzeugs (1) angeordnet sind.

9. Fräswerkzeug nach Anspruch 8, **dadurch gekennzeichnet, dass** die Platten (6) auf den Kassetten (4) in ihrer Position verstellbar sind.

## Claims

1. Method for milling a planar surface, during which a milling cutter, the rotation axis of which is perpendicular to the surface to be machined, is moved in a direction parallel to the plane of the surface so as to machine the surface in a single machining operation to a predetermined material thickness by means of a single milling head, **characterized in that** all the cutting edges of the milling cutter simultaneously machine the same material thickness so as to jointly carry out thereon, in the same axial position with respect to the surface to be machined, a rough machining operation, at least one intermediate finish machining operation, and a finish machining operation, to the same material thickness.

2. Cylindrical milling tool for implementing a method according to Claim 1, having a number of sets of cutting edges (7, 7a, 7b, 7c) which are offset radially **characterized in that** all the cutting edges are nevertheless arranged over one and the same axial sector of the tool so as to jointly machine the same material thickness when the milling cutter is moved parallel to the surface to be.

3. Milling tool according to Claim 2, **characterized in that** the cutting edges (7a, 7b, 7c) overlap in a tiered manner over their entire cutting height, in projection in a diametral plane of the tool.

4. Milling tool according to Claim 3, **characterized in that** the cutting edges (7a, 7b, 7c) are distributed regularly around the circumference of the tool in successive sets so as to form at least two identical sets of edges, each first edge (7a) of which, as seen in the direction of rotation of the tool, is a rough machining edge, and the following edges (7b, 7c) are offset successively toward the outside in the radial direction, so as to progressively machine the same material thickness.

5. Milling tool according to Claim 4, **characterized in that** it has three identical sets of edges (7a, 7b, 7c) which occupy sectors of 120° around its circumference.

6. Milling tool according to Claim 4, **characterized in that** it has four identical sets of edges (7a, 7b, 7c) which occupy sectors of 90° around its circumference.

7. Milling tool according to one of Claims 2 to 6, **characterized in that** each set of edges (7a, 7b, 7c) has at least three types of edge which respectively carry out the rough machining, an intermediate finish machining, and the finish machining of the machining work.

8. Milling tool according to one of Claims 2 to 7, **characterized in that** the cutting edges (7, 7a, 7b, 7c) belong to removable tips (6) inserted into tip-holder cartridges (4) of the tool body (1).

9. Milling tool according to Claim 8, **characterized in that** the position of the tips (6) on the cartridges (4) is adjustable.
